# EUROPEAN PATENT SPECIFICATION

(11) **EP 0 897 815 B1**
(45) Date of publication and mention of the grant of the patent: **02.06.2004**
(21) Application number: 98306416.3
(22) Date of filing: 11.08.1998
(51) Int. Cl.: B60C 23/06

(54) **Tyre air-pressure abnormality alarm device and method thereof**
Gerät und Verfahren zum Warnen vor Abweichungen des Reifendrucks
Appareil et procédé d'alarme d'anomalie de pression d'un pneumatique

(30) Priority: 12.08.1997 JP 21773697
(43) Date of publication of application: 24.02.1999
(73) Proprietor: Sumitomo Rubber Industries Ltd., Kobe-shi, Hyogo-ken (JP); SUMITOMO ELECTRIC INDUSTRIES, LTD., Osaka-shi, Osaka-fu (JP)
(72) Inventor: Horie, Hiroto, Akashi-shi, Hyogo-ken (JP); Yanase, Minao, Kobe-shi, Hyogo-ken (JP); Nakajima, Mikao, c/o Sumitomo Electric Ind., Ltd., Itami-shi, Hyogo-ken (JP); Kobayashi, Yasushi, Toyota-shi, Aichi-ken (JP); Komazawa, Masaaki, Nishikamo-gun, Aichi-ken (JP)
(74) Representative: Manitz, Finsterwald & Partner

(56) References cited:
- EP-A- 0 607 689
- EP-A- 0 657 313
- US-A- 5 591 906

## Description

The present invention relates to a tyre air-pressure abnormality alarm device and a method thereof. More particularly, it relates to a device and method capable of maintaining normal operations for detecting decompression of a tyre.

The air-pressure of a tyre may decrease due to unexpected factors such as punctures or damage to the valve. When a vehicle continues running with a deflated tyre, the tyre is excessively deformed and generates heat, and in the worst case, it may fail and burst. Therefore, numerous devices for detecting and indicating abnormalities in tyre air-pressure have been proposed in the past.

For instance, it is known to detect decrease in internal pressure by utilising relative differences in the number of revolutions of tyres (see Japanese Unexamined Patent Publication No 149119/1995).

However, since variations in the rolling radii of different tyres even of same nominal size are larger than rates of change in the number of revolutions of tyres due to a deflation of approximately 30%, it is not possible to tell whether the internal pressure is normal or abnormal when a tyre has been replace or exchanged for another. Therefore, if a tyre is changed prior art devices need to be initialised by storing a relative difference or rate between the number of revolutions of the tyres on the vehicle when the internal pressures are known to be normal.

There has also been proposed a method for detecting decrease in air-pressure based on changes in the frequency characteristics of tyre rotations (see Japanese Unexamined Japanese Patent Publication No 133831/1993). In this method, when a tyre or wheel has been exchanged, the frequency characteristics of the tyre rotations change accompanied by a change in unsprung weight, that is, the total weight of tyres and wheels, so that it is necessary to store resonant frequencies of a set of these tyres and wheels at a normal internal pressure.

There are known several methods for such initialising or starting operations for calculating and storing information to cater for variations in tyre diameters or resonant frequencies of the tyres. These are carried out with the tyres at normal internal pressure and include, for instance, pressing a press button switch for more than a specified time, short-circuiting a specified terminal to IG or GND (grounding), stepping on the brake for a prescribed number of times within a specified time or continuously holding the brake pedal for a specified time, or combining some of these methods.

However, maintaining normal operations for detecting deflation of a tyre is difficult in the following cases.
1. Where initialisation is started with a tyre being already deflated or partially deflated.
   A driver can recognise an abnormality of a tyre when air pressure of a tyre has decreased and the tyre air-pressure abnormality alarm function is actuated and an alarm lamp is turned on to tell the driver. However, since the external appearance of a tyre in which the air-pressure has decreased by 30% from the prescribed pressure is hardly distinguishable by night from that of a tyre at normal air-pressure, and there are virtually no vehicles equipped with air-pressure meters so the driver might erroneously consider that the internal pressures in his tyres are correct and consider instead that the alarm lamp has turned on due a failure of the alarm device.
   In this case, he may press the initialising switch with the aim of turning the alarm lamp off in a hurry in the case where initialisation is started by pressing a press button switch. Consequently, initialisation is started regardless of the fact that the air-pressure of a tyre is incorrect, the alarm lamp is turned off and then the tyre is left an an incorrect, possible dangerous, pressure with no indication to the driver.
   Further erroneous initialisation can also be started if the driver considers the air-pressure of a tyre to be normal and short-circuits a specified terminal to a 12V line such as IG and BATT, or GND, or operates the brake in accordance with the special series of steps.
2. Where initialisation is started while the vehicle is running.
   In the case initialisation is stated by pressing an initialising switch, pressing the initialising switch after start of driving means that the driver needs to perform an action that the driver usually does not take during driving. Therefore, to display completion of acceptance such that the driver might recognise it when the driver has pressed the initialising switch during driving the vehicle (e.g. blinking lamp three times) will thus induce such dangerous operations.
3. Where initialisation is started in an inspection mode.
   At the time of inspection before shipping vehicles from factories, operation of hardware such as the alarm lamp or switches are confirmed in an inspection mode which is different from normal operation.
   However, when the essential initialisation is started at the time of inspecting switches, it might happen that the set up of air-pressure is inappropriate or that an inappropriate coefficient is stored by rotating the vehicle wheels on a chassis dynamo rather than on the road.
4. Where initialisation is started when the device is broken or in a terminated condition.

A device which detects an abnormality in the air-pressure of a tyre based on the number of revolutions of tyres of four wheels cannot correctly function when, for example, wheel speed pulses are not correctly input to the device. It is thus required to periodically check (e.g. at periods of 40 msec) the wheel speed input. There are known methods therefor such as observing input voltages through hardware or detecting broken lines of wheel speed pulse input lines by comparing the number of revolutions of tyres of the four wheels through software.

In the case where the driver has pressed the initialising switch for starting initialisation just after a breakdown of a wheel speed pulse signal has been detected through this self-diagnosis, the driver may well erroneously consider that the device is functioning in a normal condition although it is not the case when the device displays completion of acceptance as to be recognisable to the driver (e.g. the lamp blinking three times). Similarly, when function of the device has been terminated since malfunctions frequently occur due to problems of the software or the like, displaying completion of acceptance upon pressing the initialising switch will make the driver erroneously consider that the device is functioning correctly though the functions are in terminated conditions.

The present invention has been made in view of these facts, and it is an object thereof to provide a tyre air-pressure abnormality alarm device and a method thereof which is capable of maintaining correct functions of detecting deflation of a tyre by setting starting conditions for initialising operations for updating stored values for physical amounts related to tyres or wheels.

According to a first aspect of the present invention, there is provided a tyre air-pressure abnormality alarm device for informing loss in air-pressure of tyres on a four-wheeled vehicle, characterised in that the device prohibits start of initialising operations for updating stored values of physical amounts related to tyres or wheels in the case where a condition is occurring which would cause incorrect initialisation.

The condition may be that a pressure loss is being alarmed or signalled, that the vehicle is judged to be in a running condition, that an inspection mode is being assumed or that the system is in an abnormal condition or in a terminated condition.

According to another aspect of the invention there is provided a tyre air-pressure abnormality alarm method comprising detecting rotational angular speeds of tyres or wheels of a four-wheeled vehicle, storing coefficients related to the tyres or wheels obtained form the rotational angular speeds, and determining whether air-pressure has decreased or not from a relationship between a threshold and a determined value for decompression obtained from rotational angular speeds which have been corrected by using the coefficients, characterised by determining if a condition is occurring which would prevent correct initialisation and prohibiting the start of the initialisation operation.

Here again various conditions may be determined to cause the inhibition of initialisation.

It should be noted that, in the present invention, tyre air pressure is judged to be normal when conditions are met in which the driver has continuously pressed the press button switch for more than a specified time, in which a specified terminal has been short-circuited to IG or GND, in which the brake has been stepped on for a determined number of times within a specified time, or in which the brake has been continuously held for a specified time.

Embodiments of the present invention will now be described in detail in conjunction with the accompanying drawings in which:
Figure 1 is an explanatory view showing an embodiment of a tyre air-pressure abnormality alarm device of the present invention;
Figure 2 is a block diagram showing electric arrangements of the tyre air-pressure abnormality alarm device of Figure 1;

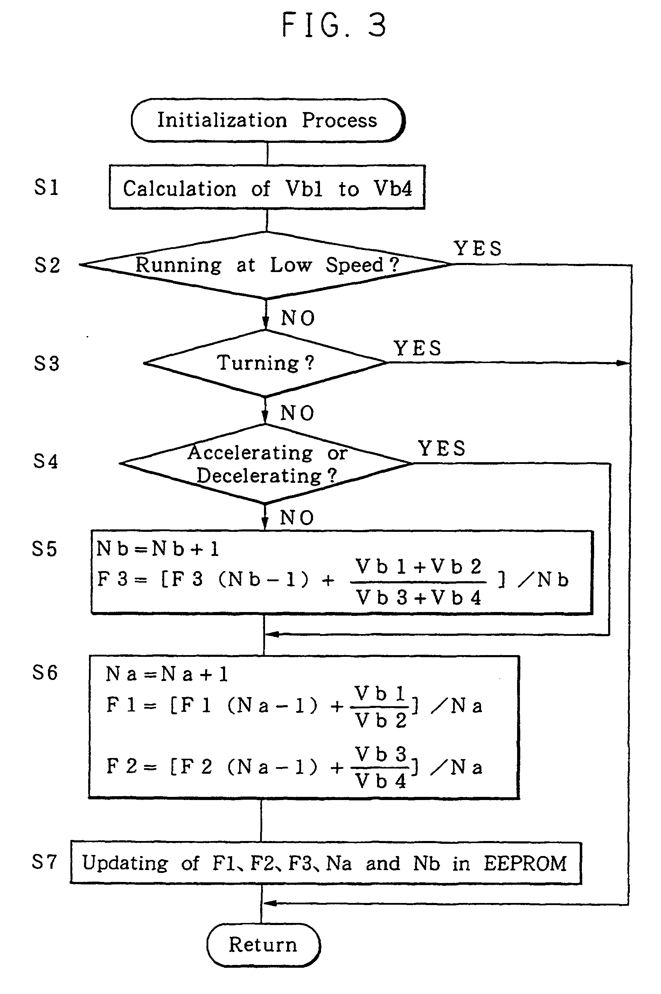

Figure 3 is a flowchart showing initial correction processes in the present invention;
Figure 4 is a flowchart showing air-pressure abnormality determining processes in the present invention;
Figure 5 is a flowchart of a program showing processes at the time of starting initialisation and operations during initialising processes; and
Figure 6 is a flowchart of interrupting processes at 40 msec.

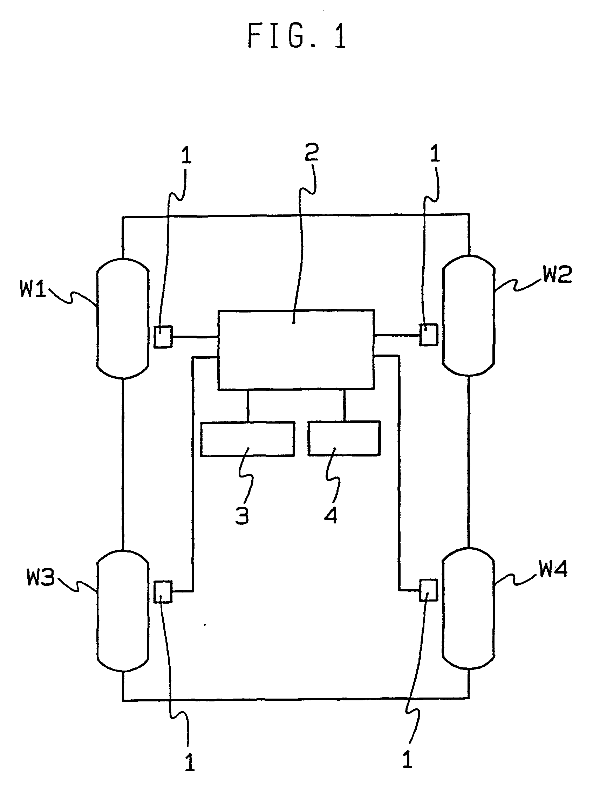

As shown in Figure 1, a tyre air-pressure abnormality alarm device (DWS) comprises wheel speed sensors 1 of normal arrangement which are respectively arranged in connection with each of tyres W1, W2, W3, W4 of a four-wheeled vehicle, and outputs of the wheel speed sensors 1 are supplied to a DWS control unit 2. To the control unit 2, there are connected an initialising switch 3 in the form of a press button for starting initialisation and a display means 4 for displaying air-pressure abnormalities.

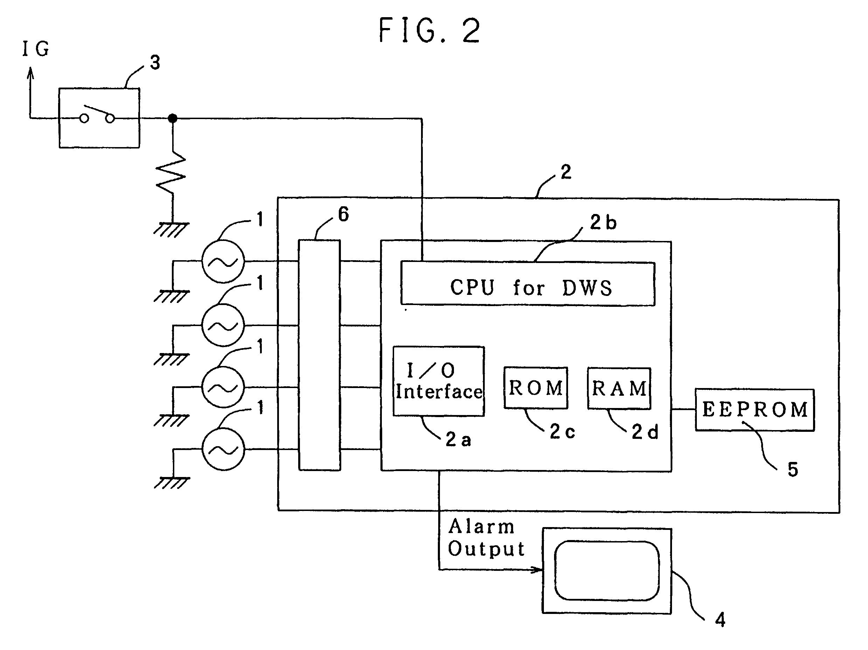

As shown in Figure 2, the control unit 2 is, for instance, composed of a microcomputer, and its hardware arrangement includes an I/O interface 2a required for sending/receiving signals to/from an external device, a CPU 2b for the DWS which functions as a centre of calculation, a ROM 2c which stores a control operation program for the CPU 2b, a RAM 2d into which data are temporarily written and are read out therefrom when the CPU 2b performs control operations, and an EEPROM 5 which is a nonvolatile memory for storing initialising coefficients F1 to F3 which will be discussed later.

Initial correction processes of the present invention will now be explained.

The wheel speed sensor 1 outputs a signal corresponding to the number of revolutions of tyre Wi (wherein "i" corresponds to each of the affixed numbers "1,2,3,4" of each of the tyres W1, W2, W3, W4). More particularly, the wheel speed sensor 1 outputs a sinusoidal signal corresponding to changes in magnetic field generated by the rotation of a multi-geared sensor rotor which is provided at an inner side of the wheel of tyre Wi. This sinusoidal signal is converted into a pulse signal (hereinafter referred to as "wheel speed pulse") in a binarisation circuit 6, and the CPU 2b calculates a rotation angular speed Vbi of tyre Wi (or wheel) based on the converted wheel speed pulses. Particularly, the calculation of rotation angular speed Vbi (Vb1 to Vb4) is performed by the following equation (Step S1)m wherein Ni denotes the number of pulses as counted from the last pulse of the preceding measuring period up to the last pulse of the prevailing measuring period, Ti time, and K a coefficient corresponding to a rotation angle of the wheel per pulse:$\text{Vbi = K x Ni/Ti}$

The CPU 2b judges whether the vehicle is running at a low speed or not (Step S2). If it is not running at a low speed, the program proceeds to the next step. The reason why the program does not proceed to the following steps when the vehicle is running at a low speed is that quantisation errors become large since the number of input pulses decreases at the time of running at a low speed.

Next, it is judged whether the vehicle is making a turn or not (Step S3). This judgement is performed by obtaining, for instance, the turning radius from rotational angular speeds of right and left tyres.

If the vehicle is not making a turn, it is judged whether the vehicle is accelerating or decelerating (Step S4). If the vehicle is not accelerating or decelerating, right and left front wheels ratio F1, right and left rear wheels ratio F2 and front and rear wheels ratio F3 which are initialising coefficients for correcting variations in tyre radiuses or wheel radiuses based on the rotational angular speed Vbi.$\text{F1 = Vb1/Vb2}$$\text{F2 = Vb3/Vb4}$$\text{F3 = (Vb1 + Vb2)/(Vb3 + Vb4)}$

It should be noted that when the vehicle is accelerating/decelerating, only the right and left front wheels ratio F1 and the right and left rear wheels ratio F2 are calculated. The reason for setting such a condition only for the front and rear wheels ratio F3 that the vehicle is running in a neutral condition (running without acceleration/deceleration) is that slip of the front or rear wheels might occur during driving.

Since high accuracy is required for initialising processes, it is preferable that the rotational angular speed ratios are updated in a gentle manner by taking averages of past rotational angular speed ratios at certain updating intervals instead of employing momentary rotational angular speed ratios F1, F2, F3. Supposing that the number of times for updating F1, F2 is set as Na, and the number of times for updating F3 is Nb, F1, F2 and F3 used for the updating are actually obtained by the following equation (1) (Step S5, S6). It should be noted that the reason for setting two different number of times for updating Na and Nb is that only F3 is required to meet the condition that the vehicle is running in a neutral condition (running without acceleration/deceleration) as explained above. 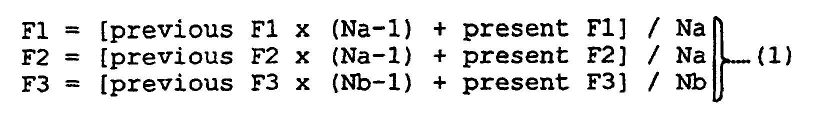 F1, F2, F3, Na and Nb are stored in the EEPROM (nonvolatile memory) each time updating is performed (Step S7), so that even when electric power has been cut during calculation, calculation can be continued by reading out F1, F2, F3, Na and Hb from the EEPROM at the next time when electric power has been turned on.

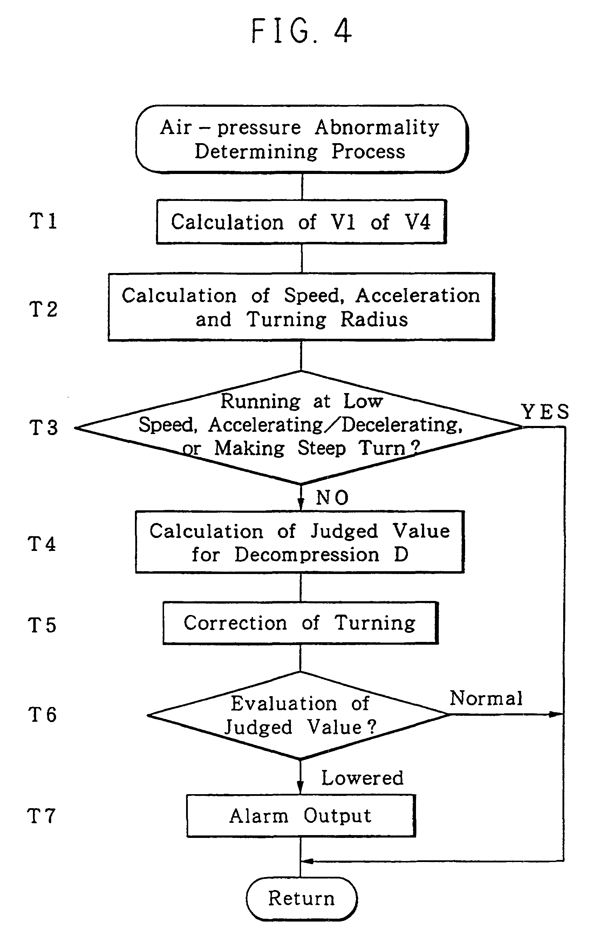

Next, as shown in Figure 4, for executing the air-pressure abnormality determining processes of the present invention, the rotational angular speed Vi after initial correction is obtained from the following equation (2) by using coefficients F1 to F3.

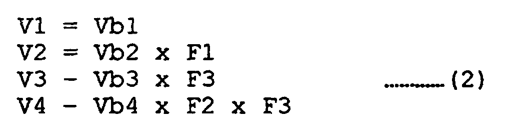

Next, the speed, acceleration (front and rear acceleration), and turning radius are calculated (Step T2). The acceleration can alternatively be obtained by equipping the vehicle with an acceleration meter. It can also be obtained from the rotational angular speed Vi (see Japanese Unexamined Patent Publication No 92114/1994).

It is judged whether the vehicle is running at a low speed, is accelerating/decelerating, or is making a steep turn (Step T3). If neither applies, a judged value for decompression D is obtained from the following equation (3) (Step T4, see Japanese Unexamined Patent Publication No 305011/1988).$\text{D =} \frac{\text{(V1 + V4) / 2 - (V2 + V3) / 2}}{\text{(V1 + V2 + V3 + V4) / 4}} \text{× 100}$

Further, when the vehicle is making a gentle turn, the judged value D is corrected according to equation (4) in order to eliminate influences of variable factors on the judged value D such as turning radius R of the vehicle, speed, lateral directional acceleration (lateral G), and front and rear directional acceleration (front and rear G) (Step T5, see Japanese Unexamined Patent Publication No 164720/1996).$\text{D' = D -} \frac{{\text{lateralGx(A1 + A2xspeed}}^{\text{2}} \text{+ A3xfront and rear G}}{\text{R}}$

It should be noted that coefficients A1, A2, and A3 are preliminarily obtained based on turning radius R, speed, lateral G and front and rear G of the vehicle which have been obtained by performing a test running in which each of the tyres Wi is of normal internal pressure.

By evaluating the relationship between judged value D or D' and the threshold (Step T6), it is judged whether the air-pressure has decreased or not. For instance, in case threshold D_{TH1} and D_{TH2} are set at 0.1, it is determined that the air-pressure has decreased when the relationship between the judged value D' and the threshold satisfies D'<-D_{TH1} and D'> D_{TH2}, and alarm is outputted by making a specified display on the display device 4 of Figure 2 (Step T2). It should be noted that while the air-pressure abnormality determining process is performed for each measuring period, it is also possible to output an alarm signal only when judgements that the threshold has been exceeded are successively obtained for a certain number of times in order to stabilise contents of determination (see Japanese Unexamined Patent Publication No 186644/1995). With this arrangement, erroneous generation of an alarm due to unexpected influences such as noise can be prevented.

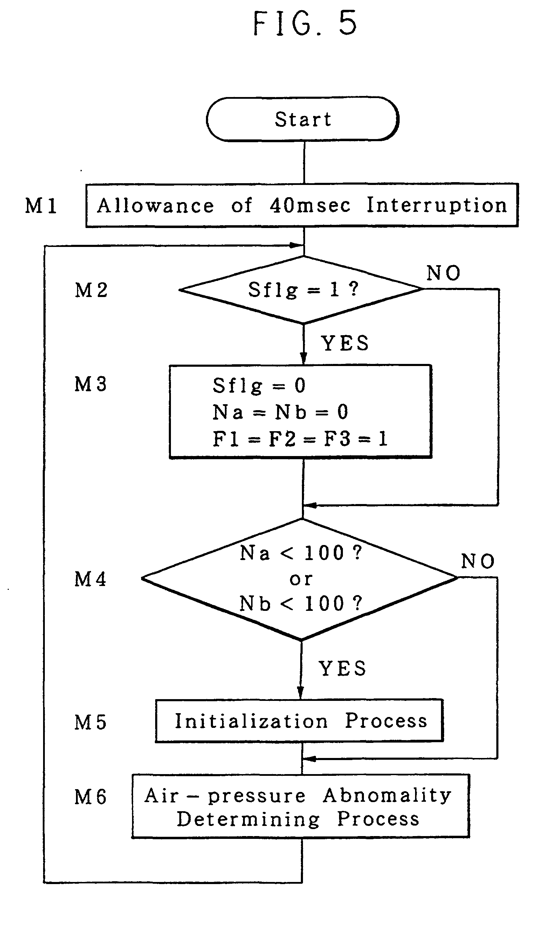

Processes performed at the start of initialisation and operations during the initialising processes will now be explained by using a main flowchart (Figure 5) indicating the whole program.

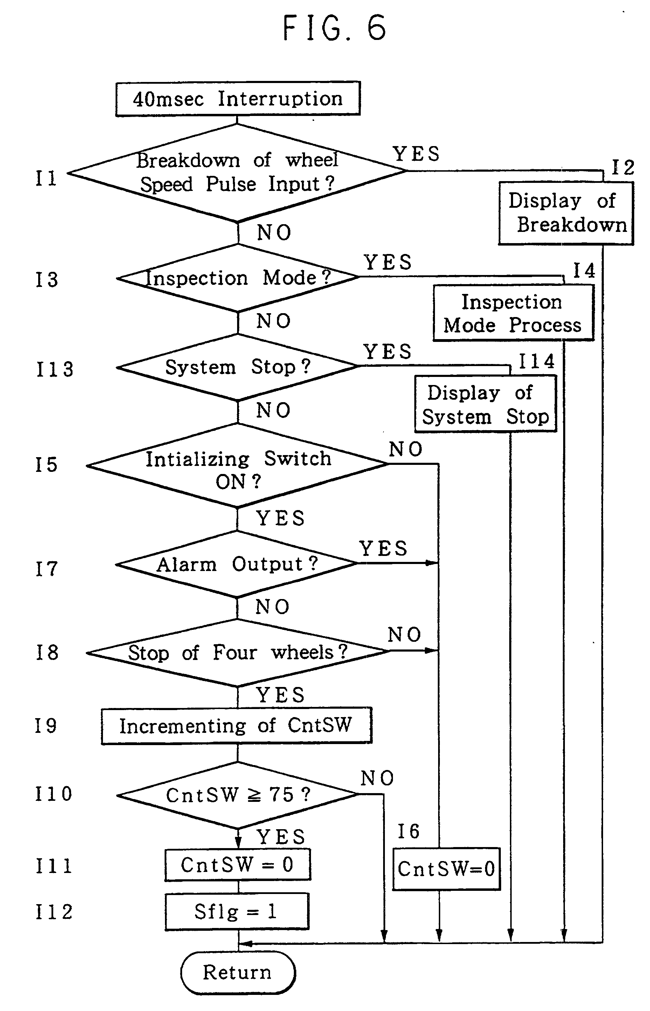

When the program is started, timer interrupting processes are first allowed (Step M1). When timer interrupting processes are allowed, a timer interrupting program is operated thereafter at specified periods, e.g. 40 msec (Figure 6). In the main program periodical processes are performed thereafter for, e.g. each second.

It is judged whether an initialisation start command has been released (Sflg = 1?) (Step M2), and if such a command has been released, counters for initialisation Na, Nb are cleared to be 0, and coefficients F1 to F3 are cleared to be 1 (Step M3).

It is then judged whether the initialising process shall be performed now. If either of the counters NA, Nb does not satisfy a specified value, e.g. 100 (Step M4), F1 to F3 are updated and initialising processes for storing these in the EEPROM are continued (Step M5).

Thereafter, air-pressure abnormality determining processes are performed (Step M6), and the program awaits the following process period.

Since determination of initialising switch input, operation of the alarm lamp or self-diagnosis for detecting a breakdown need to be performed at exact periods, these are performed in the timer interrupting processes.

Thus, since determination of start of initialisation is also performed in the timer interrupting process, the determining operations for start of initialisation will be explained by employing a flowchart of 40 msec interrupting process.

First, as shown in Figure 6, diagnosis whether the wheel speed pulse input is defect is performed (Step I1). If any of the pulse number NINTi (I - 1,2,3,4) of the four wheels during 40 msec which are taken in at 40 msec periods indicate that the vehicle is running (e.g. not less than 4 pulses), and any of the pulse numbers NINTi of the four wheels indicate that the vehicle is in a terminated condition (0 pulse), it is determined that the terminated wheel speed pulse input is defect and breakdown is displayed by e.g. turning on a lamp (Step I2).

It is then judged whether the prevailing mode is an inspection mode or not (Step I3). More particularly, if the potential of the input port of the CPU changes by short-circuiting a specified pin of a connector of the device to IG or GND, it is determined that the prevailing mode is an inspection mode. If the prevailing mode is the inspection mode, inspection mode processes for confirming hardware operations such as initialising switch or alarm lamp are performed (Step I4).

Next, by referring to a system-terminated flag, it is judged whether the system is in a terminated condition or not (Step I13). If the system-terminated flag is ON, the driver is informed that the system is in a terminated condition by making a display e.g. by blinking the lamp (Step I14).

The system-terminated flag is set by reading in a flag which has been stored in the EEPROM into the RAM at the time when power is turned on. The system-terminated flag in the EEPROM can be set by communicating with an external device, by combining operation of the initialising switch or brake etc., or by short-circuiting a specified terminal to IG or GND in order to make the microcomputer recognise that the system is in a terminated condition. It is also possible to set the system-terminated flag by making the microcomputer recognise that the system is in a terminated condition through changing the condition of the port of the microcomputer by means of a dip-switch or the like.

By judging the potential of the port input of the CPU connected to the initialising switch, it is judged whether the initialising switch has been pressed or not (Step I5). If it has not been pressed, the counter for determining switching is cleared (Step I6).

If it has been pressed, it is judged whether an alarm is being output or not by referring to a specified flag as determined in the air-pressure abnormality determining processes ( a flag indicating whether the air-pressure is abnormal or normal) (Step I7), and if alarm is being output, the counter for determining switching is cleared (Step I6).

If any of the pulse numbers NINTi of the four wheels is not 0, it is determined that the vehicle is running (Step I8), and the counter for determining switching is cleared (Step I6).

In this manner, if the system is not defect, the prevailing mode is not the inspection mode, the system is not in a terminated condition, the initialising switch has been pressed, no alarm is being output, and the tyre rotational angular speeds of all four wheels are 0 (the vehicle is not running), the counter is incremented (Step I9), and if it is determined that a specified time (e.g. 3 seconds) has elapsed, the counter is cleared and the initialisation-started flag (Sflg) is set Steps 10, 11, 12).

According to the first and fifth aspects of the present invention, start of initialisation is not accepted when an alarm signal is being outputted in case initialisation shall be started with any tyre being in a deflated condition so that erroneous operations by the driver are prevented. With this arrangement, initialisation is accepted only after the internal pressure has become normal, whereby erroneous initialisation with any tyre being in a decompressed condition can be prevented. Thus, normal operations for detecting decompression of a tyre can be maintained.

According to the second and sixth aspects of the present invention, start of initialisation is not accepted when the vehicle is running in case initialisation shall be started while the vehicle is running, and this arrangement is to be described in an operations manual. With this arrangement, any dangers during driving which might occur by operating a switch which is usually not actuated during driving can be eliminated.

According to the third and seventh aspects of the present invention, start of initialisation is not accepted when the prevailing mode is an inspection mode in case initialisation shall be started under an inspection mode whereby it can be prevented for starting unnecessary initialisation, and normal operations for detecting decompression of a tyre can be maintained.

According to the fourth and eighth aspects of the present invention, an alarm lamp indicating an abnormality of the systems is turned on simultaneously with prohibiting acceptance of initialisation when an abnormality has been detected in a self-diagnosis at the time when power is turned on or a self-diagnosis which is regularly repeated thereafter, in case the driver is trying to start initialisation when the device is defect or in a terminated condition. With this arrangement, it can be prevented for erroneously recognising that the device is operating normally by accepting only initialisation and a breakdown of the device can be rapidly detected. Further, normal operations for detecting decompression of a tyre can be maintained.

## Claims

1. A tyre air-pressure abnormality alarm device for informing decrease in air-pressure of tyres attached to a four-wheeled vehicle, **characterised in that** the device prohibits start of initialising operations for updating stored values for physical amounts related to tyres or wheels in the case where a condition is occurring which would cause incorrect initialisation.

2. A tyre air-pressure abnormality alarm device according to claim 1, **characterised in that** the condition is that air-pressure abnormality of a tyre is being alarmed.

3. A tyre air-pressure abnormality alarm device according to claim 1, **characterised in that** the condition is that the vehicle is judged to be in a running condition.

4. A tyre air-pressure abnormality alarm device according to claim 1, **characterised in that** the condition is that inspection mode is being assumed.

5. A tyre air-pressure abnormality alarm device according to claim 1, **characterised in that** the condition is that the system is in an abnormal condition or in a terminated condition.

6. A tyre air-pressure abnormality alarm method comprising detecting rotational angular speeds of tyres or wheels of a four-wheeled vehicle, storing coefficients related to the tyres or wheels obtained from the rotational angular speeds, and determining whether air-pressure has decreased or not from a relationship between a threshold and a determined value for decompression obtained from rotational angular speeds which have been corrected by using the coefficients, **characterised by** determining if a condition is occurring which would prevent correct initialisation and prohibiting the initialisation operation.

7. A method of detecting a tyre pressure abnormality according to claim 6, **characterised by** inhibiting initialisation if air-pressure abnormality of a tyre is being alarmed.

8. A method of detecting a tyre pressure abnormality according to claim 6, **characterised by** inhibiting initialisation if the vehicle is judged to be in a running condition.

9. A method of detecting a tyre pressure abnormality according to claim 6, **characterised by** inhibiting initialisation if an inspection mode is being assumed.

10. A method of detecting a tyre pressure abnormality according to claim 6, **characterised by** inhibiting initialisation if the system is in an abnormal condition or in a terminated condition.

## Patentansprüche

1. Vorrichtung zum Warnen vor Abweichungen eines Reifenluftdruckes, um über eine Abnahme des Luftdruckes von an einem Vierradfahrzeug angebrachten Reifen zu informieren, **dadurch gekennzeichnet, dass** die Vorrichtung einen Start von Initialisierungsvorgängen zur Aktualisierung gespeicherter Werte für physikalische Größen, die mit Reifen oder Rädern in Beziehung stehen, in dem Fall verhindert, dass ein Zustand auftritt, der eine fehlerhafte Initialisierung hervorrufen würde.

2. Vorrichtung zum Warnen vor Abweichungen eines Reifenluftdruckes nach Anspruch 1, **dadurch gekennzeichnet, dass** der Zustand ist, dass vor einer Abweichung des Luftdruckes eines Reifens gewarnt wird.

3. Vorrichtung zum Warnen vor Abweichungen eines Reifenluftdruckes nach Anspruch 1, **dadurch gekennzeichnet, dass** der Zustand ist, dass beurteilt wird, dass das Fahrzeug sich in einem fahrenden Zustand befindet.

4. Vorrichtung zum Warnen vor Abweichungen eines Reifenluftdruckes nach Anspruch 1, **dadurch gekennzeichnet, dass** der Zustand ist, dass eine Wartungsbetriebsart angenommen wird.

5. Vorrichtung zum Warnen vor Abweichungen eines Reifenluftdruckes nach Anspruch 1, **dadurch gekennzeichnet, dass** der Zustand ist, dass sich das System in einem unnormalen Zustand oder in einem beendeten Zustand befindet.

6. Verfahren zum Warnen vor Abweichungen eines Reifenluftdruckes, umfassend: Detektieren von Rotationswinkelgeschwindigkeiten von Reifen oder Rädern eines Vierradfahrzeuges, Speichern von Koeffizienten, die mit den Reifen oder Rädern in Beziehung stehen und aus den Rotationswinkelgeschwindigkeiten erhalten werden, und Feststellen, ob der Luftdruck abgenommen hat oder nicht, aus einer Beziehung zwischen einem Schwellenwert und einem festgestellten Wert für eine Dekompression, der aus Rotationswinkelgeschwindigkeiten erhalten wird, die unter Verwendung der Koeffizienten korrigiert worden sind, **gekennzeichnet durch** Feststellen, ob ein Zustand auftritt, der eine richtige Initialisierung verhindern würde, und Verhindern des Initialisierungsvorganges.

7. Verfahren zum Detektieren von Abweichungen eines Reifendruckes nach Anspruch 6, **gekennzeichnet durch** Verhindern einer Initialisierung, wenn vor Abweichungen des Luftdruckes eines Reifens gewarnt wird.

8. Verfahren zum Detektieren von Abweichungen eines Reifendruckes nach Anspruch 6, **gekennzeichnet durch** Verhindern einer Initialisierung, wenn beurteilt wird, dass sich das Fahrzeug in einem fahrenden Zustand befindet.

9. Verfahren zum Detektieren von Abweichungen eines Reifendruckes nach Anspruch 6, **gekennzeichnet durch** Verhindern einer Initialisierung, wenn eine Wartungsbetriebsart angenommen wird.

10. Verfahren zum Detektieren von Abweichungen eines Reifendruckes nach Anspruch 6, **gekennzeichnet durch** Verhindern einer Initialisierung, wenn sich das System in einem unnormalen Zustand oder in einem beendeten Zustand befindet.

## Revendications

1. Dispositif d'alarme en cas d'anomalie de la pression d'air d'un pneumatique destiné à donner des informations de réduction de pression d'air des pneumatiques montés sur un véhicule à quatre roues, **caractérisé en ce que** le dispositif interdit le début des opérations d'initialisation pour la remise à jour de valeurs mémorisées de quantités physiques liées aux pneumatiques ou aux roues dans le cas où il se produit une condition qui pourrait provoquer une initialisation erronée.

2. Dispositif d'alarme en cas d'anomalie de la pression d'air d'un pneumatique selon la revendication 1, **caractérisé en ce que** la condition est que l'anomalie de la pression d'un pneumatique est à un état d'alarme.

3. Dispositif d'alarme en cas d'anomalie de la pression d'air d'un pneumatique selon la revendication 1, **caractérisé en ce que** la condition est le fait que le véhicule est déterminé comme étant à un état de roulement.

4. Dispositif d'alarme en cas d'anomalie de la pression d'air d'un pneumatique selon la revendication 1, **caractérisé en ce que** la condition est le fait que le mode d'inspection est supposé.

5. Dispositif d'alarme en cas d'anomalie de la pression d'air d'un pneumatique selon la revendication 1, **caractérisé en ce que** la condition est le fait que le système est en condition d'anomalie ou en condition terminée.

6. Procédé d'alarme en cas d'anomalie de pression d'un pneumatique, comprenant la détection des vitesses angulaires de rotation des pneumatiques ou des roues d'un véhicule à quatre roues, la mémorisation de coefficients liés aux pneumatiques ou aux roues et obtenus d'après les vitesses angulaires de rotation, et la détermination du fait que la pression d'air a diminué ou non d'après une relation entre un seuil et une valeur déterminée pour la décompression obtenue à partir des vitesses angulaires de rotation qui ont été corrigées par utilisation des coefficients, **caractérisé par** la détermination du fait qu'il se produit une condition qui pourrait empêcher une initialisation erronée, et par l'interdiction de l'opération d'initialisation.

7. Procédé de détection d'anomalie de la pression d'un pneumatique selon la revendication 6, **caractérisé par** l'inhibition de l'initialisation lorsque l'anomalie de la pression d'air d'un pneumatique donne lieu à une alarme.

8. Procédé de détection d'anomalie de la pression d'un pneumatique selon la revendication 6, **caractérisé par** l'inhibition de l'initialisation lorsque le véhicule est déterminé comme étant à un état de roulement.

9. Procédé de détection d'anomalie de la pression d'un pneumatique selon la revendication 6, **caractérisé par** l'inhibition de l'initialisation lorsqu'un mode d'inspection est supposé.

10. Procédé de détection d'anomalie de la pression d'un pneumatique selon la revendication 6, **caractérisé par** l'inhibition de l'initialisation lorsque le système est à un état anormal ou à une condition terminée.
